# EUROPÄISCHE PATENTSCHRIFT

(11) **EP 4 119 016 B1**
(45) Veröffentlichungstag und Bekanntmachung des Hinweises auf die Patenterteilung: **18.06.2025**
(21) Anmeldenummer: 21185470.8
(22) Anmeldetag: 14.07.2021
(51) Int. Cl.: A47J 43/07

(54) **SPEISENZUBEREITUNGSGERÄT MIT MEHRTEILIGEM ANBAUTEIL**
FOOD PREPARATION DEVICE WITH MULTI-PIECE ATTACHMENT
DISPOSITIF DE PRÉPARATION DES ALIMENTS POURVU D'UN ACCESSOIRE EN PLUSIEURS PARTIES

(43) Veröffentlichungstag der Anmeldung: 18.01.2023
(73) Patentinhaber: Vorwerk & Co. Interholding GmbH, 42275 Wuppertal (DE)
(72) Erfinder: Heynen, Andreas, 42477 Radevormwald (DE); Landsecker, Kai, 40213 Düsseldorf (DE); Starflinger, Frank, Saratoga, CA, 95070 (US); Charopoulos, Philipp, 40878 Ratingen (DE); Wojke, Sigurd, 45549 Sprockhövel (DE)
(74) Vertreter: Gille Hrabal Partnerschaftsgesellschaft mbB Patentanwälte

(56) Entgegenhaltungen:
- DE-A1- 102014 111 193
- US-A1- 2005 000 370
- US-A1- 2005 185 509
- US-A1- 2012 085 851
- US-B2- 9 775 467

## Beschreibung

Die Erfindung betrifft ein Speisenzubereitungsgerät für die Zubereitung einer Speise. Das Speisenzubereitungsgerät umfasst ein Speisenzubereitungsgefäß, in dem die Speise zubereitet werden kann. Das Speisenzubereitungsgerät umfasst einen Deckel für das Speisenzubereitungsgefäß. Das Speisenzubereitungsgerät umfasst eine Verriegelungseinrichtung für das Verriegeln des Deckels, wenn der Deckel auf das Speisenzubereitungsgefäß aufgesetzt ist. Das Speisenzubereitungsgerät umfasst einen Sensor, der ausgelöst ist, wenn die Verriegelungseinrichtung den aufgesetzten Deckel verriegelt. Das Speisenzubereitungsgerät umfasst ein mehrteiliges Anbauteil. Die Erfindung betrifft außerdem ein Verfahren.

Elektrisch betriebene Speisenzubereitungsgeräte mit einem Speisenzubereitungsgefäß und einem Deckel für das Speisenzubereitungsgefäß sind aus den Druckschriften DE 10 2014 111 193 A1 sowie DE 10 2017 121 946 A1 bekannt. Der auf das Speisenzubereitungsgefäß aufgesetzte Deckel kann mit einer elektrisch betriebenen Verriegelungseinrichtung verriegelt werden. Ist der Deckel verriegelt, kann dieser nicht mehr von dem Speisenzubereitungsgefäß gelöst werden. Für ein Lösen muss erst die Verriegelungseinrichtung entriegelt werden. Ein Speisenzubereitungsgerät mit einem Anbauteil, das auf das Speisenzubereitungsgerät aufgesetzt werden kann, ist aus der Druckschrift US 2005 / 185 509 A1 bekannt. Das Anbauteil enthält einen Deckel, an dem ein Befüllstutzen befestigt ist, und einen Deckel, der den Befüllstutzen verschließt. US 9 775 467 B2 offenbart eine Vorrichtung zur Verarbeitung von Speisen mit einem Mischgefäß, einem abnehmbaren Klingenhalter und einem elektrischen Motor zum Antreiben des Klingenhalters.

Mithilfe von einem Sensor kann bei einem solchen Speisenzubereitungsgerät überprüft werden, ob der Deckel auf das Speisenzubereitungsgefäß aufgesetzt und ordnungsgemäß verriegelt ist. In Abhängigkeit davon kann der weitere Betrieb des Speisenzubereitungsgeräts gesteuert werden. Speisenzubereitungsgeräte mit Sensoren zur Überprüfung einer Verriegelung eines aufgesetzten Deckels werden unter der Marke Thermomix^{®} von der Fa. Vorwerk Deutschland Stiftung & Co. KG, Wuppertal, Deutschland, vertrieben.

Für die Küchenmaschine Thermomix^{®} gibt es Anbauteile wie zum Beispiel das für ein Dampfgaren vorgesehene, aus mehreren Teilen bestehende Anbauteil Varoma^{®}. Das mehrteilige Anbauteil Varoma^{®} umfasst einen behälterartigen Grundkörper mit einem dampfdurchlässigen Boden und einem Deckel für den Grundkörper. Das Anbauteil Varoma^{®} wird für ein Dampfgaren auf den verriegelten Deckel der Küchenmaschine Thermomix^{®} aufgesetzt. Es kann dann allerdings nicht überprüft werden, ob die Teile des Anbauteils Varoma^{®} von einem Benutzer so zusammengesetzt und das Anbauteil so auf das Speisenzubereitungsgefäß aufgesetzt worden ist, dass eine Speise planmäßig durch Dampfgaren zubereitet werden kann.

Es ist Aufgabe der Erfindung, ein mehrteiliges Anbauteil bei einer Küchenmaschine zuverlässig verwenden zu können.

Die Aufgabe der Erfindung wird durch eine Küchenmaschine mit den Merkmalen des ersten Anspruchs gelöst. Der Nebenanspruch betrifft ein Verfahren. Vorteilhafte Ausgestaltungen ergeben sich aus den abhängigen Ansprüchen.

Ein erfindungsgemäßes Speisenzubereitungsgerät umfasst ein Speisenzubereitungsgefäß und einen Deckel, der auf das Speisenzubereitungsgefäß aufgesetzt werden kann. Das Speisenzubereitungsgerät weist ein Anbauteil auf, das anstelle des Deckels auf das Speisenzubereitungsgefäß aufgesetzt werden kann. Das Anbauteil umfasst zwei Teile, also ein erstes Teil und ein zweites Teil. Das Speisenzubereitungsgerät umfasst eine Verriegelungseinrichtung für ein Verriegeln des auf das Speisenzubereitungsgefäß aufgesetzten Deckels sowie für ein Verriegeln des auf das Speisenzubereitungsgefäß aufgesetzten Anbauteils. Das Speisenzubereitungsgerät umfasst einen Sensor, der ausgelöst ist, wenn der aufgesetzte Deckel durch die Verriegelungseinrichtung oder durch das aufgesetzte Anbauteil verriegelt ist. Der Sensor ist nicht ausgelöst, wenn nur ein Teil des Anbauteils auf das Speisenzubereitungsgefäß aufgesetzt und verriegelt ist.

Ein erfindungsgemäßes Speisenzubereitungsgerät ist insbesondere ein elektrisches Gerät, also ein Gerät, das für seinen Betrieb elektrischen Strom benötigt. Ein erfindungsgemäßes Speisenzubereitungsgerät ist insbesondere ein Gerät, mit dem zumindest ein Schritt einer Speisenzubereitung durchgeführt werden kann, wie zum Beispiel Mischen, Zerkleinern, Befeuchten, Trocknen, Kühlen oder Erhitzen. Durch das Speisenzubereitungsgerät kann also eine Speise oder zumindest eine Zutat einer Speise beispielsweise gemischt, zerkleinert, befeuchtet, getrocknet, gekühlt und/oder erhitzt werden. Eine Speise kann fest und/oder flüssig sein. Eine Speise kann nur ein Lebensmittel umfassen wie zum Beispiel nur Kartoffeln. Eine Speise kann aus verschiedenen Zutaten zusammengesetzt sein wie zum Beispiel Möhren, Erbsen, Zwiebeln, Salz und Pfeffer. Eine Speise kann eine Flüssigkeit umfassen wie zum Beispiel Wasser oder Öl.

Das Speisenzubereitungsgefäß ist für die Zubereitung einer Speise vorgesehen. Zutaten einer Speise, die sich unmittelbar in dem Speisenzubereitungsgefäß befinden, können beispielsweise durch ein drehbares Mischwerkzeug zerkleinert werden. Das Speisenzubereitungsgefäß kann Heizelemente umfassen, um Zutaten einer Speise oder eine Speise in dem Speisenzubereitungsgefäß erhitzen zu können. Das Speisenzubereitungsgerät kann aber auch Heizelemente für ein Erhitzen des Speisenzubereitungsgefäßes umfassen, die getrennt von dem Speisenzubereitungsgefäß vorhanden sind. Ein Basisteil des Speisenzubereitungsgeräts kann eine Aufnahme umfassen, die die Position des Speisenzubereitungsgefäßes festlegen kann. Die Aufnahme kann eine gefäßartige Vertiefung sein, in die das Speisenzubereitungsgefäß eingesetzt werden kann oder eingesetzt ist. Die Aufnahme kann eine Ablauföffnung umfassen, durch die vermieden wird, dass sich Flüssigkeit in der Aufnahme ansammeln kann. Insbesondere kann das Speisenzubereitungsgefäß von der Ausnehmung abgenommen und so von dem Basisteil des Speisenzubereitungsgeräts getrennt werden.

Das Speisenzubereitungsgefäß umfasst eine Öffnung. Der Deckel kann auf das Speisenzubereitungsgefäß so aufgesetzt werden, dass die Öffnung dann durch den Deckel abgedeckt ist.

Das Anbauteil unterscheidet sich vom Deckel durch seine Funktion. Die Funktion des Deckels besteht darin, dass Speisenzubereitungsgefäß vollständig oder zumindest weitgehend vollständig verschließen zu können. Das Anbauteil kann auf andere Weise zur Zubereitung einer Speise beitragen. Beispielsweise kann das Anbauteil eine Speise oder eine Zutat einer Speise zerkleinern. Da der Deckel nicht zerkleinern kann, unterscheidet sich die Funktion des Deckels von der Funktion des Anbauteils.

Es ist nicht ausgeschlossen, dass das Anbauteil ebenfalls das Speisenzubereitungsgefäß vollständig oder zumindest nahezu vollständig verschließen kann. Ein Anbauteil im Sinne der vorliegenden Erfindung muss aber insbesondere zumindest eine darüber hinausgehende Funktion erfüllen können.

Das Anbauteil umfasst ein erstes Teil und ein zweites Teil, wenn die beiden Teile voneinander zerstörungsfrei gelöst und wieder zusammengesetzt werden können. Für ein Lösen ist kein Werkzeug erforderlich.

Es ist möglich, dass die beiden Teile so zusammengesetzt werden können, sodass diese im Anschluss daran beispielsweise durch eine Rastverbindung miteinander verbunden sind. Um die beiden Teile dann wieder voneinander zu lösen, muss erst die Rastverbindung gelöst werden. Ist die Rastverbindung gelöst, so sind die beiden Teile typischerweise nicht im Sinne der vorliegenden Erfindung zusammengesetzt. Eine solche Rastverbindung kann beispielsweise einen Riegel umfassen, der in eine verriegelte Position und in eine entriegelte Position bewegt werden kann. In der verriegelten Position kann der Riegel dann verrastet sein, sodass dieser sich nicht unplanmäßig aus der verriegelten Position wegbewegen kann.

Es ist möglich, dass die beiden Teile nur lose zusammengesetzt werden können. Ein Beispiel für ein loses Zusammensetzen liegt vor, wenn das eine erste Teil in eine dafür vorgesehene Aufnahme des zweiten Teils eingesetzt werden kann. Ist das erste Teil in die dafür vorgesehene Aufnahme des zweiten Teils eingesetzt, so sind dann die beiden Teile im Sinne der vorliegenden Erfindung zusammengesetzt. Die beiden Teile sind dann im Sinne der vorliegenden Erfindung nur lose zusammengesetzt, weil ein Anheben des ersten Teils genügt, um dieses vom zweiten Teil zu lösen. Es gibt im Fall eines losen Zusammensetzens also kein Verbindungsmittel, das für eine feste mechanische Verbindung zwischen den beiden Teilen sorgt und welches erst gelöst werden muss, um die beiden Teile voneinander trennen zu können.

Das Anbauteil kann mehr als zwei Teile umfassen, die zum Anbauteil zusammengesetzt werden können und die ohne Werkzeug wieder voneinander gelöst werden können.

Die Verriegelungseinrichtung kann den Deckel verriegeln, wenn der Deckel auf das Speisenzubereitungsgefäß aufgesetzt ist. Ist der Deckel verriegelt, so kann der Deckel nicht mehr von dem Speisenzubereitungsgefäß gelöst werden. Soll der Deckel von dem Speisenzubereitungsgefäß gelöst werden, so muss die Verriegelungseinrichtung erst entriegelt werden.

Ist anstelle des Deckels das Anbauteil auf das Speisenzubereitungsgefäß aufgesetzt worden, so kann die Verriegelungseinrichtung das Anbauteil verriegeln. Für ein Lösen des Anbauteils vom Speisenzubereitungsgefäß ist es dann ebenfalls erforderlich, zunächst die Verriegelungseinrichtung zu entriegeln. Dies gilt zumindest für zwei Teile des Anbauteils. Umfasst das Anbauteil mehr als zwei Teile, so ist es nicht erforderlich, dass kein Teil des Anbauteils gelöst werden kann, wenn die Verriegelungseinrichtung das Anbauteil verriegelt. Es kann also beispielsweise sein, dass das Anbauteil vier Teile umfasst. Ist das Anbauteil verriegelt, so können beispielsweise drei Teile nicht gelöst werden, aber das vierte Teil. Es ist aber auch möglich, dass das Anbauteil so beschaffen ist, dass sämtliche vier Teile nicht gelöst werden können, wenn das Anbauteil durch die Verriegelungseinrichtung verriegelt worden ist. Es kann beispielsweise sein, dass das Anbauteil fünf Teile umfasst. Ist das Anbauteil verriegelt, so können beispielsweise vier Teile nicht gelöst werden, aber das fünfte Teil.

Ein Basisteil des Speisenzubereitungsgeräts kann die Verriegelungseinrichtung umfassen, die den Deckel im verriegelten Zustand unlösbar mit dem Speisenzubereitungsgefäß verbinden kann. Ist das Speisenzubereitungsgerät so beschaffen, dass das Speisenzubereitungsgefäß von dem Basisteil gelöst werden kann, so umfasst dann das erfindungsgemäße Aufsetzen des Deckels bzw. das Aufsetzen des Anbauteils auf das Speisenzubereitungsgefäß, dass dann das Speisenzubereitungsgefäß nicht von dem Basisteil gelöst ist. Das Speisenzubereitungsgefäß ist dann beispielsweise in eine Aufnahme des Basisteils eingesetzt. Das Basisteil kann eine Steuerungseinrichtung, einen elektrischen Antrieb, einen Sensor, einen Schalter und/oder ein Display umfassen.

Der Sensor kann sich in einem ausgelösten und in einem nicht ausgelösten Zustand befinden und signalisieren, in welchem Zustand er sich befindet. Der Sensor kann also zwei verschiedene Zustände einnehmen. Das Signalisieren des Zustands kann durch ein elektrisches Signal erfolgen. Durch den Sensor überprüft das Speisenzubereitungsgerät den verriegelten und entriegelten Zustand, weil der Sensor ausgelöst ist, wenn der aufgesetzte Deckel oder das aufgesetzte Anbauteil durch die Verriegelungseinrichtung verriegelt ist. Alternativ oder ergänzend kann das Speisenzubereitungsgerät den verriegelten oder entriegelten Zustand anzeigen. Der Sensor ist nicht ausgelöst, wenn nur ein Teil des Anbauteils auf das Speisenzubereitungsgefäß aufgesetzt und verriegelt ist. Dieses Teil kann das erste Teil oder das zweite Teil sein. Der Sensor ist nicht ausgelöst, wenn kein aufgesetztes Anbauteil und auch kein aufgesetzter Deckel verriegelt ist. Ist ein Anbauteil oder ein Deckel lediglich auf das Speisenzubereitungsgefäß aufgesetzt, aber nicht verriegelt, so ist der Sensor nicht ausgelöst. Durch das Verriegeln wird der Sensor also ausgelöst. Dieser befindet sich anschließend im ausgelösten Zustand. Durch das Entriegeln wird der Sensor in den nicht ausgelösten Zustand gebracht. Im Anschluss an das Entriegeln befindet sich der Sensor daher im nicht ausgelösten Zustand.

Da das Anbauteil zwei Teile umfasst, ist es möglich, dass ein Benutzer versehentlich nur ein Teil des Anbauteils auf das Speisenzubereitungsgefäß aufsetzt. Es ist möglich, dass beispielsweise der Benutzer im Anschluss daran das Speisenzubereitungsgefäß so betätigt, dass dadurch das aufgesetzte Teil verriegelt wird, so dass dieses dann nicht mehr von dem Speisenzubereitungsgefäß gelöst werden kann. Weil der Sensor im Anschluss an die Verriegelung von nur einem Teil des Anbauteils nicht ausgelöst ist, kann durch das Speisenzubereitungsgerät eine Störung festgestellt werden. Das Vorliegen einer Störung kann dann dem Benutzer beispielsweise angezeigt werden. Der Benutzer hat so die Möglichkeit zeitnah festzustellen, dass ein Teil des Anbauteils fehlt. Er kann im Anschluss daran den Fehler zeitnah beheben. Ein störungsfreier Betrieb kann dadurch verbessert sichergestellt werden. Es ist auch möglich, dass das Speisenzubereitungsgefäß weitere Verarbeitungsschritte nicht erlaubt, bis die Störung behoben ist. Auch auf diese Weise können Probleme vermieden werden, die mit der Störung verbunden sein können.

In einer Ausgestaltung ist die Verriegelungseinrichtung so beschaffen, dass das Anbauteil im aufgesetzten Zustand durch das Verriegeln von einer Ausgangsstellung in eine Endstellung bewegt wird. Durch das Bewegen des Anbauteils in die Endstellung wird der Sensor ausgelöst. In der Endstellung ist das Anbauteil verriegelt. Der Sensor ist folglich ausgelöst, wenn sich das Anbauteil in der Endstellung befindet.

Es ist beispielsweise möglich, dass das Anbauteil aufgesetzt wird und im Anschluss daran gedreht wird, um so die Endstellung und damit die verriegelte Stellung zu erreichen. Das Drehen des Anbauteils kann beispielsweise manuell durch den Benutzer erfolgen. Das Drehen kann aber auch motorisiert durchgeführt werden.

Im aufgesetzten Zustand kann beispielsweise ein elastisch verformbarer Dichtring oder eine anders geformte elastische Dichtung des Anbauteils auf dem Speisenzubereitungsgefäß aufliegen. Beispielsweise durch die Verriegelungseinrichtung kann dann das Anbauteil weiter in Richtung des Zubereitungsgefäßes bewegt werden, weil der elastisch verformbare Dichtring bzw. die anders geformte elastische Dichtung zusammengepresst werden kann. Das Vorhandensein eines verformbaren Dichtrings oder einer anders geformten elastischen Dichtung ermöglicht es also, dass das aufgesetzte Anbauteil im Anschluss an das Aufsetzen von seiner dann vorliegenden Ausgangsstellung in seine Endstellung linear bewegt werden kann. Wird entriegelt, so bewirkt der elastisch verformbare Dichtring bzw. die anders geformte elastische Dichtung, dass das Anbauteil in seine Ausgangsstellung zurückbewegt wird. Das Bewegen kann wiederum manuell durch den Benutzer bewirkt werden. Es ist aber bei dieser Ausgestaltung auf besonders einfache Weise möglich, dass das Bewegen in Richtung Endstellung motorisiert durchgeführt wird.

Es ist möglich, dass das Anbauteil durch das Aufsetzen auf das Speisenzubereitungsgefäß auch auf ein federndes Bauteil eines mechanischen Schalters aufgesetzt wird. Der mechanische Schalter kann so angeordnet sein, dass dadurch ein Spiel zwischen dem Anbauteil und dem Speisenzubereitungsgefäß verbleibt und zwar zumindest in der Nähe des mechanischen Schalters. Beispielsweise durch eine Kippbewegung kann das Anbauteil dann beispielsweise durch die Verriegelungseinrichtung weiter in Richtung Endstellung verschwenkt werden. Der mechanische Schalter und zwar sein federndes Bauteil wird dadurch betätigt und der Schalter dadurch ausgelöst. Die Bewegung in die Endstellung kann wiederum auf technisch einfache Weise motorisiert realisiert werden. Das Bewegen des Anbauteils zurück in seine Ausgangsstellung kann durch die Federkraft des federnden Bauteils und/oder durch eine elastische Dichtung bewirkt werden.

Das Vorgesagte gilt in entsprechender Weise für den Deckel. Die Verriegelungseinrichtung ist dann also auch so beschaffen, dass der Deckel im aufgesetzten Zustand durch das Verriegeln von einer Ausgangsstellung in eine Endstellung bewegt wird. Durch das Bewegen des Deckels in die Endstellung wird der Sensor ausgelöst. In der Endstellung ist der Deckel verriegelt. Der Sensor ist folglich ausgelöst, wenn sich der Deckel in der Endstellung befindet.

In einer Ausgestaltung ist die Verriegelungseinrichtung so beschaffen, dass das erste Teil des Anbauteils durch das Verriegeln von der Ausgangsstellung in die Endstellung bewegt wird. Das erste Teil ist so beschaffen, dass dieses durch das Verriegeln das zweite Teil des Anbauteils von der Ausgangsstellung in die Endstellung bewegt. Das zweite Teil ist so beschaffen, dass dieses den Sensor ausgelöst hat, wenn das zweite Teil sich in seiner Endstellung befindet.

Das zweite Teil wird also nicht unmittelbar beispielsweise durch die Verriegelungseinrichtung motorisiert in die Endstellung bewegt. Dies geschieht stattdessen durch das erste Teil. Wäre das erste Teil also nicht vorhanden, dann könnte das zweite Teil nicht von einer Ausgangsstellung in die Endstellung im Rahmen einer Verriegelung bewegt werden. Umgekehrt kann es aber sein, dass das erste Teil beispielsweise motorisiert durch die Verriegelungseinrichtung in die Endstellung bewegt und verriegelt werden kann, ohne dass das zweite Teil vorhanden ist.

In einer Ausgestaltung ist das zweite Teil ein Behälter und das erste Teil ist eine Abdeckung für die Öffnung des Behälters. Die Abdeckung kann auf den Behälter aufgesetzt werden. Die Öffnung des Behälters ist dann zumindest teilweise verschlossen. Der Behälter ist so, dass dieser in das Speisenzubereitungsgefäß eingesetzt werden kann. Der Behälter weist vorzugsweise an seiner Oberseite eine Verbreiterung auf, die auf dem Öffnungsrand des Speisenzubereitungsgefäßes aufsetzen kann. Die Verbreiterung befindet sich damit immer außerhalb des Speisenzubereitungsgefäßes. Die Verbreiterung ist also selbst dann grundsätzlich von außen sichtbar, wenn der übrige Teil des Behälters in das Speisenzubereitungsgefäß eingesetzt ist. Die Verbreiterung ist auch dann grundsätzlich von außen sichtbar, wenn darüber hinaus die Abdeckung auf den Behälter aufgesetzt ist. Die Verbreiterung des Behälters kann kreisförmig oder teilkreisförmig sein.

Vorzugsweise weist der Behälter eine Halterung für die Abdeckung derart auf, dass die Abdeckung durch die Halterung gegen ein seitliches Verrutschen gesichert ist, wenn die Abdeckung auf den Behälter aufgesetzt ist.

In einer Ausgestaltung weist der Behälter an seiner Oberseite zumindest abschnittsweise einen seitlich abstehenden Rand auf. Der Rand steht dann flanschartig seitlich vom übrigen Teil des Behälters ab und verbreitert den Behälter bei seiner Oberseite. Diese Verbreiterung des Behälters kann eine Aufnahme für die Abdeckung umfassen. Die Abdeckung kann in die Aufnahme eingesetzt werden. Die Aufnahme der Verbreiterung kann so die Abdeckung gegen ein seitliches Verrutschen schützen. Die Aufnahme dient also als Halterung oder kann Teil der Halterung sein. Der flanschartig abstehende Rand kann die Öffnung des Behälters vollständig oder zumindest abschnittsweise umlaufen.

In einer Ausgestaltung kann der Sensor durch den flanschartig bzw. seitlich abstehenden Rand des Behälters ausgelöst werden. Beispielsweise kann der seitlich abstehende Rand des Behälters auf einem Taster oder Kipphebel eines elektrischen Schalters aufliegen, wenn der Behälter in das Speisenzubereitungsgefäß eingesetzt worden ist. Der Behälter ist in das Speisenzubereitungsgefäß dann so eingesetzt, dass zumindest ein beim elektrischen Schalter befindlicher Abschnitt des seitlich abstehenden Rands nach unten gedrückt werden kann und zwar gegen eine Federkraft des Tasters. Wird der seitlich abstehende Rand des Behälters nach unten gedrückt, so wird dadurch der Taster bzw. der Kipphebel bewegt und so der elektrische Schalter ausgelöst. Der elektrische Schalter ist also ein Sensor im Sinne der vorliegenden Erfindung. Die Bewegung des seitlich abstehenden Rands oder eines Abschnitts des seitlich abstehenden Rands von einer Ausgangsstellung in eine Endstellung kann aber auch zum Beispiel optisch oder beispielsweise mithilfe von Ultraschall detektiert werden.

In einer Ausgestaltung umfasst der Behälter an seiner Oberseite zumindest einen nach oben und/ oder seitlich abstehenden Griff. Steht der Griff seitlich ab, so kann der Griff als Verbreiterung genutzt werden, die verhindert, dass der Behälter vollständig in das Speisenzubereitungsgefäß hineinrutschen kann. Steht der Griff nach oben ab, so kann dieser die Abdeckung gegen ein seitliches Verrutschen schützen und so zumindest Teil der Halterung für die Abdeckung sein. Steht der Griff sowohl seitlich als auch nach oben ab, so kann der Griff sowohl als Verbreiterung genutzt werden als auch als Halterung für die Abdeckung.

In einer Ausgestaltung umfasst das Anbauteil ein Zerkleinerungswerkzeug zum Zerkleinern von Speisen. Das Zerkleinerungswerkzeug ist relativ zu dem Behälter derart angeordnet oder kann relativ zu dem Behälter derart angeordnet werden, dass eine Speise oder eine Zutat einer Speise nach der Zerkleinerung mittels des Zerkleinerungswerkzeugs schwerkraftbedingt nach unten fällt, um im Behälter des Anbauteils aufgefangen zu werden. Das Zerkleinerungswerkzeug kann drehbar sein, um durch das Drehen eine Speise oder eine Zutat einer Speise zu zerkleinern. Das Zerkleinerungswerkzeug kann beispielsweise eine drehbare Reibscheibe sein. Eine solche Reibscheibe kann nach oben abstehende Zähne umfassen. Außerdem kann die Reibscheibe Löcher umfassen, damit durch die Zähne zerkleinerte Zutaten einer Speise die Reibscheibe passieren und in den Behälter fallen können.

Das Zerkleinerungswerkzeug weist insbesondere mindestens eine Schneide zum Zerkleinern auf. Das Zerkleinerungswerkzeug kann eine Schneidscheibe sein. Es kann längliche, im Wesentlichen radial angeordnete Klingen zum Schneiden von Scheiben, beispielsweise von Kartoffeln, aufweisen. Es kann alternativ oder zusätzlich lokal begrenzte und mit einer Klinge versehene Vertiefungen bzw. Mulden, beispielsweise zum Zerkleinern von Gemüse, aufweisen. Dabei kann die Funktion abhängig von der Drehrichtung der Schneidscheibe sein. In einer Drehrichtung der Schneidscheibe werden beispielsweise Streifen geschnitten und in der entgegengesetzten Richtung Scheiben.

Das Zerkleinerungswerkzeug ermöglicht ein besonders kontrolliertes Zerkleinern von Zutaten für eine Speise, da Speisen oder Zutaten im Anschluss an eine Zerkleinerung in den Behälter fallen und nicht weiter zerkleinert werden können.

Der Behälter kann eine mittig und/oder senkrecht verlaufende Öffnung aufweisen, durch welche eine Antriebswelle des Speisenzubereitungsgeräts hindurch verlaufen kann, um das Zerkleinerungswerkzeug anzutreiben. Das Speisenzubereitungsgerät kann so ausgestaltet sein, dass im derart positionierten Zustand des Behälters eine Welle durch das Speisenzubereitungsgefäß hindurch verläuft, um mittels einem unterhalb des Speisenzubereitungsgefäßes befindlichen Motors das Zerkleinerungswerkzeug anzutreiben. Die Welle kann mehrteilig sein und Kupplungselemente umfassen, um die verschiedenen Abschnitte der Welle miteinander zu verbinden.

So kann in einer vorteilhaften Ausgestaltung ein Abschnitt der Welle ein Mischwerkzeug des Speisenzubereitungsgeräts mit dem Zerkleinerungswerkzeug drehfest verbinden. Ein Drehen des Mischwerkzeugs hat dann zur Folge, dass das Zerkleinerungswerkzeug mit gleicher Drehzahl gedreht wird. Dieser Abschnitt der Welle kann insbesondere von dem Mischwerkzeug gelöst werden, um das Speisenzubereitungsgerät mit dem darin befindlichen Mischwerkzeug unabhängig vom Zerkleinerungswerkzeug mit dem zugehörigen Abschnitt der Welle und dem Behälter nutzen zu können. Das Zerkleinerungswerkzeug kann fest mit dem Abschnitt der Welle verbunden sein. Es ist aber auch möglich, dass das Zerkleinerungswerkzeug lösbar mit dem genannten Abschnitt der Welle verbunden ist, um eine Aufbewahrung und eine Reinigung zu erleichtern.

In einer weiteren Ausgestaltung ist das Zerkleinerungswerkzeug drehbar in einem Gehäuseteil des Behälters angeordnet. Das Zerkleinerungswerkzeug kann so angeordnet oder anordbar sein, dass durch eine Öffnung in der Abdeckung eingeführte Speisen nach Passage des Zerkleinerungswerkzeugs in dem Behälter aufgefangen werden. Entsprechendes gilt auch hier wie an anderer Stelle der Beschreibung für Zutaten einer Speise. Die Öffnung weist insbesondere die Form eines Stutzens auf. Sie kann durch einen Stößel verschließbar sein, der zum Hineindrücken der Speise ausgestaltet ist.

In einer Ausgestaltung befindet sich das Anbauteil zwischen zwei Verriegelungselementen der Verriegelungseinrichtung, wenn das Anbauteil auf das Speisenzubereitungsgefäß aufgesetzt ist. Entsprechendes gilt für den aufgesetzten Deckel. Das Anbauteil sowie der Deckel können dadurch besonders zuverlässig verriegelt werden.

In einer Ausgestaltung ist ein Verriegelungselement der Verriegelungseinrichtung ein um seine Längsachse drehbarer Arm, der von einer Öffnungsstellung in eine Verriegelungsstellung und zurückgedreht werden kann. Der drehbare Arm kann vorzugsweise durch einen elektrischen Antrieb des Speisenzubereitungsgeräts gedreht werden. Der Arm kann einen teilkreisförmigen Querschnitt aufweisen. Bevorzugt gibt es zwei solcher Arme. Das Anbauteil befindet sich dann zwischen den beiden Armen, wenn das Anbauteil auf das Speisenzubereitungsgefäß aufgesetzt ist. Entsprechendes gilt für den Deckel.

Der Sensor kann beispielsweise ein optischer Sensor sein, der also auf optische Weise feststellen kann, ob ein Anbauteil oder ein Deckel verriegelt sind. Der Sensor kann beispielsweise eine Lichtschranke umfassen. Durch das Verriegeln wird die Lichtschranke beispielsweise unterbrochen. Ist die Lichtschranke unterbrochen, so befindet sich der Sensor im ausgelösten Zustand. Der Sensor kann beispielsweise ein induktiver Sensor sein. Durch das Verriegeln kann dann ein induktives Signal ausgelöst werden. Im Anschluss daran befindet sich der Sensor im ausgelösten Zustand. Der Sensor kann ein Drucksensor sein. Durch das Verriegeln kann beispielsweise ein Druck auf den Sensor ausgeübt werden. Der Sensor befindet sich dann im ausgelösten Zustand. In einer bevorzugten Ausgestaltung ist der Sensor ein elektrischer Schalter mit einem Taster oder einem Kipphebel, auf dem das Anbauteil aufliegt, wenn das Anbauteil auf das Speisenzubereitungsgefäß aufgesetzt ist.

Das Speisenzubereitungsgerät kann ein drehbares Mischwerkzeug zum Mischen und/oder Zerkleinern einer Speise in einem Bodenbereich des Speisenzubereitungsgefäßes umfassen. Durch das Mischwerkzeug können besonders schnell und einfach ein oder mehrere Zutaten einer Speise gemischt und/oder zerkleinert werden. Im Vergleich zum Zerkleinerungswerkzeug kann allerdings weniger kontrolliert zerkleinert werden.

Um besonders schnell und einfach zerkleinern zu können, hat sich bewährt, dass das Mischwerkzeug mit wenigsten 2000 oder 3000 Umdrehungen pro Minute, vorzugsweise 5000 Umdrehungen pro Minute gedreht werden kann. Es können aber auch geringere Drehgeschwindigkeiten genügen, um eine Speise oder eine Zutat einer Speise schnell und einfach zu zerkleinern. Besonders bevorzugt kann mit wenigstens 8000 Umdrehungen/min gedreht werden. Geringe Drehgeschwindigkeiten können dazu genutzt werden, um eine Speise oder Zutaten einer Speise lediglich zu vermischen, ohne die Speise bzw. Zutaten einer Speise zu zerkleinern.

Der Deckel für das Speisenzubereitungsgefäß kann zweiteilig sein. Ein erstes Deckelteil eines zweiteiligen Deckels kann eine vergleichsweise kleine Öffnung umfassen, die mit dem zweiten Teil des Deckels verschlossen werden kann. Der zweite Teil des Deckels kann insbesondere manuell entfernt werden und zwar völlig unabhängig von einem verriegelten Zustand. Es steht dann eine kleine Öffnung bereit, durch die hindurch eine Speise oder Zutaten einer Speise in das Speisenzubereitungsgefäß auch dann eingefüllt werden können, wenn der erste Teil des Deckels fest mit dem Speisenzubereitungsgefäß durch die Verriegelungseinrichtung verbunden ist. Der zweite Teil des Deckels kann eine Gefäßform umfassen, der dann beispielsweise als Messbecher dienen kann, um Zutaten dosieren zu können. Der Deckel ist vollständig geschlossen, sodass das Speisenzubereitungsgefäß dann von außen unzugänglich ist. Ein Deckel im Sinne der vorliegenden Erfindung ist typischerweise zumindest überwiegend geschlossen.

Das Speisenzubereitungsgerät umfasst vorzugsweise eine Steuerungseinheit, mit der die Drehzahl für das Mischwerkzeug eingestellt werden kann. Durch die Steuerungseinheit kann für das Mischwerkzeug grundsätzlich eine Drehzahl von wenigstens 5000 Umdrehungen pro Minute, vorzugsweise von wenigstens 8000 Umdrehungen pro Minute, eingestellt werden. Das Mischwerkzeug kann also dann mit wenigstens 5000 Umdrehungen pro Minute, vorzugsweise mit wenigstens 8000 Umdrehungen pro Minute, rotieren. Besonders bevorzugt sind 10.000 Umdrehungen pro Minute und mehr möglich. Durch die genannten Drehzahlen wird erreicht, dass Zutaten einer Speise, die sich unmittelbar in dem Speisenzubereitungsgefäß befinden, schnell und zuverlässig zerkleinert werden können. Derart hohe Drehzahlen sind zwar nicht zwingend erforderlich, um Zutaten einer Speise zerkleinern zu können. Derart hohe Drehzahlen erleichtern jedoch ein gewünschtes Zerkleinern. Die Steuerungseinheit muss daher nicht zwingend in der Lage sein, eine Drehzahl von wenigstens 5000 Umdrehungen pro Minute oder wenigstens 8000 Umdrehungen pro Minute einstellen zu können.

Das Speisenzubereitungsgerät und zwar grundsätzlich ein Basisteil des Speisenzubereitungsgeräts kann eine Eingabeeinrichtung umfassen wie zum Beispiel einen Schieberegler, einen Drehknopf und/oder ein berührungsempfindliches Display. Über die Eingabeeinrichtung kann eine gewünschte Drehzahl manuell eingestellt werden. Mithilfe der Eingabeeinrichtung kann beispielsweise eingestellt werden, dass das Mischwerkzeug mit 5000 Umdrehungen pro Minute dreht. Die Steuerungseinheit steuert im Anschluss an eine entsprechende Eingabe dann die Drehzahl so, dass das Mischwerkzeug mit 5000 Umdrehungen pro Minute rotiert. Durch die Eingabeeinrichtung können auch andere Drehzahlen ausgewählt werden, die beispielsweise weniger als 5000 Umdrehungen pro Minute betragen oder mehr. Die Eingabeeinrichtung kann so beschaffen sein, dass Drehzahlen stufenlos verändert werden können. Die Eingabeeinrichtung kann so beschaffen sein, dass verschiedene Stufen und dadurch verschiedene Drehzahlen eingestellt werden können. Die Eingabeeinrichtung kann so beschaffen sein, dass wenigstens fünf verschiedene Stufen für Drehgeschwindigkeiten vorhanden sind.

Die Steuerungseinheit kann so beschaffen sein, dass die Drehgeschwindigkeit für das Mischwerkzeug auf unter 25000 Umdrehungen pro Minute begrenzt ist, um mechanische Überlastungen zu vermeiden.

Die Steuerungseinheit kann so beschaffen sein, dass diese eine Drehzahl für das Mischwerkzeug automatisiert einstellen kann, so zum Beispiel in Abhängigkeit von einem digital gespeicherten Rezept oder in Abhängigkeit von ein oder mehreren Messwerten, die mithilfe von ein oder mehreren Sensoren ermittelt werden. Die ein oder mehreren Sensoren können Teil des Speisenzubereitungsgeräts sein, so zum Beispiel Teil des Basisteils und/oder des Speisenzubereitungsgefäßes. Es kann sich aber auch um einen externen Sensor handeln wie zum Beispiel ein Thermometer, das drahtlos Daten mit dem Speisenzubereitungsgerät austauschen kann und zwar insbesondere mit dem Basisteil.

Ein Mischwerkzeug kann zumindest eine von einer Welle abstehende Klinge umfassen. Die Klinge umfasst zumindest eine Schneidkante, durch die Zutaten einer Speise besonders gut zerkleinert werden können. Der Querschnitt einer Schneidkante läuft spitz zu. An einer der Schneidkante gegenüberliegenden Seite kann die Klinge eine stumpfe Kante aufweisen. Im Vergleich zur Schneidkante können mit der stumpfen Kante Zutaten einer Speise nicht oder zumindest deutlich schlechter zerkleinert werden. Insbesondere bei dieser Ausgestaltung der Erfindung kann die Drehrichtung des Mischwerkzeugs ausgewählt werden, um wahlweise Zerkleinern oder nur Mischen zu können.

Das Mischwerkzeug kann eine Mehrzahl von solchen Klingen umfassen. Es können beispielsweise zwei, drei oder vier Klingen vorhanden sein, die beispielsweise radial gleichmäßig verteilt von der Welle abstehen können. In axialer Richtung können Klingen zumindest abschnittsweise in unterschiedlichen Höhen angeordnet sein, um Speise in dem Speisenzubereitungsgefäß oder Zutaten einer Speise in unterschiedlichen Höhen erfassen zu können. Grundsätzlich sind sämtliche Klingen nahe beim Grund des Speisenzubereitungsgefäßes angeordnet. Die Klingen befinden sich daher beispielsweise nur im unteren Drittel des Speisenzubereitungsgefäßes. Die ein oder mehreren Klingen des Mischwerkzeugs sind also vorzugsweise in der Nähe des Bodens des Speisenzubereitungsgefäßes angeordnet, um Zutaten einer Speise bodennah erfassen zu können.

Die Welle des Mischwerkzeugs kann durch einen Elektromotor des Speisenzubereitungsgeräts angetrieben werden. Die Steuerungseinheit kann dann die Drehzahl des Elektromotors und damit die Drehzahl des Mischwerkzeugs steuern. Bevorzugt kann die Steuerungseinheit auch die Drehrichtung des Mischwerkzeugs steuern.

Die Welle des Mischwerkzeugs kann durch den Boden des Speisenzubereitungsgefäßes hindurchführen, damit die Welle ein Einfüllen einer Speise in das Speisenzubereitungsgefäß nicht behindert. Die Welle des Mischwerkzeugs kann aber auch von oben in das Speisenzubereitungsgefäß hineinreichen.

Das Mischwerkzeug kann mit dem Speisenzubereitungsgefäß fest verbunden sein. Dies schließt nicht aus, dass das Mischwerkzeug vom Boden des Speisenzubereitungsgefäßes auch ohne Werkzeug demontiert werden kann, um vor allem das Mischwerkzeug leicht und gründlich von allen Seiten reinigen zu können.

Das Speisenzubereitungsgefäß ist flüssigkeitsdicht. Es kann also eine Flüssigkeit in das Speisenzubereitungsgefäß hineingefüllt werden, ohne dass die Flüssigkeit aus dem Speisenzubereitungsgefäß herausfließen kann.

Die Welle des Mischwerkzeugs kann unterhalb des Bodens des Speisenzubereitungsgefäßes ein Kupplungselement umfassen, das mit einem Kupplungselement einer Welle eines Elektromotors gekuppelt werden kann. Im gekuppelten Zustand kann dann eine Drehbewegung des Elektromotors auf das Mischwerkzeug übertragen werden. Durch Vorsehen von solchen Kupplungselementen kann erreicht werden, dass das Speisenzubereitungsgefäß von dem übrigen Teil des Speisenzubereitungsgeräts gelöst werden kann. Die beiden Kupplungselemente verbinden also die beiden Wellen drehfest miteinander und zwar grundsätzlich in beide Drehrichtungen. Es ist nicht erforderlich, dass die beiden Kupplungselemente die beiden Wellen in axialer Richtung miteinander verbinden. Ganz im Gegenteil ist dies sogar nachteilhaft, weil dann ein Abnehmen des Speisenzubereitungsgefäßes behindert wird.

Befindet sich eine Zutat einer Speise in einem Behälter des Anbauteils, dann befindet sich die Zutat nicht unmittelbar im Speisenzubereitungsgefäß. Eine Zutat, die sich in dem Behälter befindet, kann durch das Mischwerkzeug weder gemischt noch zerkleinert werden.

Ein Behälter des Anbauteils kann flüssigkeitsdicht sein wie das Speisenzubereitungsgefäß. Ein Behälter kann aber zum Beispiel siebförmig sein. Die Funktion des Behälters kann sein, zerkleinerte Zutaten einer Speise daran zu hindern, durch das Mischwerkzeug weiter zerkleinert zu werden. Dies kann durch siebförmige Wände des Behälters erreicht werden. Daher müssen die Wände und/oder der Boden des Behälters nicht zwingend flüssigkeitsdicht sein. Ein flüssigkeitsdichter Behälter ist aber besonders zu bevorzugen, da dieser besonders zuverlässig verhindert, dass zerkleinerte Speise oder Zutaten, die zerkleinert worden sind, unplanmäßig in das Speisenzubereitungsgefäß gelangen.

Offenbart ist außerdem ein Anbauteil für ein Einsetzen in ein Speisenzubereitungsgefäß eines erfindungsgemäßen Speisenzubereitungsgeräts, welches einen Behälter und eine Abdeckung für den Behälter umfasst, wobei zumindest eine Stufe in eine Öffnung eines Griffs des Behälters eingesetzt ist, wenn die Abdeckung den Behälter abdeckt, und der Behälter einen seitlich abstehenden oberen Rand umfasst.

Das Anbauteil kann ein Zerkleinerungswerkzeug umfassen.

Die Erfindung betrifft außerdem ein Verfahren zum Zerkleinern einer Speise unter Nutzung eines erfindungsgemäßen Speisenzubereitungsgeräts, wobei das Anbauteil auf das Speisenzubereitungsgefäß des Speisenzubereitungsgeräts aufgesetzt und nach dem Aufsetzen verriegelt wird, wobei durch das Verriegeln der Sensor durch ein Teil des Anbauteils ausgelöst wird.

Nachfolgend wird die Erfindung auch anhand von Figuren näher erläutert. Nachfolgend genannte Merkmale können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Pressmittel mit Stößeln eines Zerkleinerungsaufsatzes;
- Figur 2:: Abdeckung des Zerkleinerungsaufsatzes;
- Figur 3:: Schneidscheibe des Zerkleinerungsaufsatzes;
- Figur 4:: Behälter des Zerkleinerungsaufsatzes;
- Figur 5:: Welle des Zerkleinerungsaufsatzes;
- Figur 6:: Küchenmaschine mit Deckelteil;
- Figur 7:: Küchenmaschine mit Innenansicht in das Speisenzubereitungsgefäß;
- Figur 8:: Küchenmaschine mit Zerkleinerungsaufsatz.

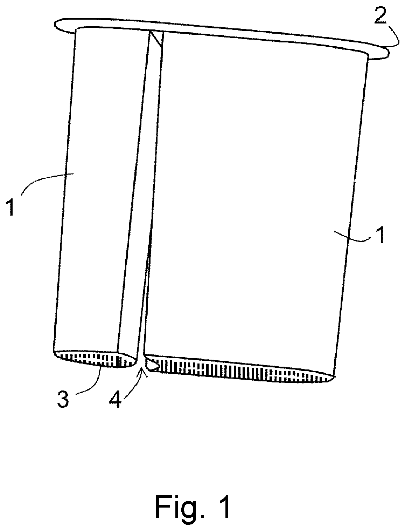

Die Figuren 1 bis 5 zeigen eine schematische Darstellung der insgesamt fünf Teile eines Zerkleinerungsaufsatzes. Der Zerkleinerungsaufsatz ist ein Anbauteil für ein Speisenzubereitungsgerät und zwar für eine Küchenmaschine.

Die Figur 1 zeigt ein Pressmittel mit zwei Stößeln 1. Die beiden Stößel 1 sind an ihrer Oberseite durch einen umlaufenden Rand 2 fest miteinander verbunden. Der Rand 2 steht seitlich ab. Ein jeder Stößel 1 kann zugleich als Gefäß ausgebildet sein, so zum Beispiel als Messbecher. An der Unterseite können beide Stößel 1 vorstehende Noppen 3 aufweisen, die eine Zutat einer Speise oder eine Speise fixieren sollen. Zwischen den beiden Stößeln 1 kann wie in der Figur 1 gezeigt ein Spalt 4 vorhanden sein.

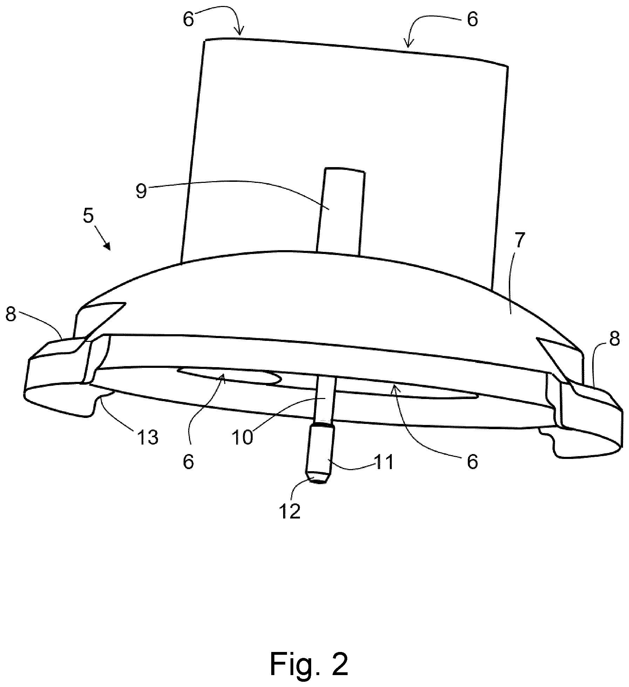

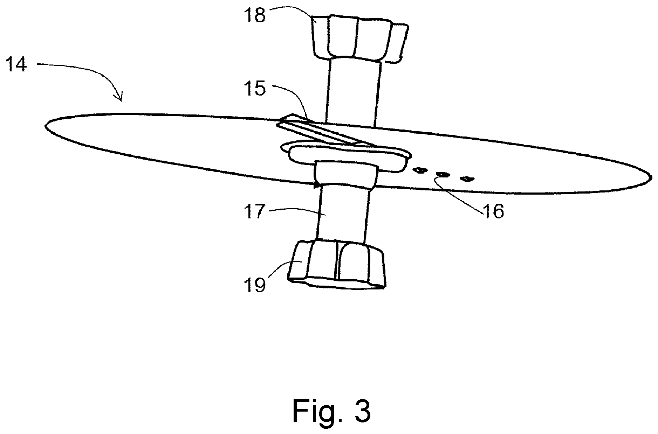

In der Figur 2 wird eine Abdeckung 5 des Zerkleinerungsaufsatzes gezeigt. Die Abdeckung 5 umfasst zwei Schächte 6, die durch einen nach oben abstehenden Stutzen mit einer inneren Trennwand gebildet werden. Die Schächte 6 sind so an die beiden Stößel 1 angepasst, dass die Stößel 1 in die beiden Schächte 6 hineingesteckt werden können. Durch den seitlich abstehenden Rand 2 wird verhindert, dass die Stößel 1 durch die Schächte 6 hindurch fallen können. Mithilfe der Stößel 1 kann eine Speise oder eine Zutat einer Speise durch die Schächte 6 hindurch gegen eine in der Figur 3 gezeigtes Zerkleinerungswerkzeug 14 gepresst werden.

Die Schächte 6 bzw. der Stutzen sind an ihrer Unterseite mit einer gewölbten Kappe 7 verbunden und zwar in einem randseitigen Bereich der Kappe 7. An der Unterseite der Kappe 7 sind an zwei gegenüberliegenden Seiten teilkreisförmige Stufen 8 vorhanden. Die beiden teilkreisförmigen Stufen 8 stehen seitlich sowie nach unten von der Kappe 7 ab.

Ein Dorn 9 steht nach oben von der Kappe 7 ab und zwar in etwa von der Mitte der Kappe 7. Durch den Dorn 9 wird eine nach unten gegenüber der Kappe 7 vorstehender Stab 10 gehalten. Der Außendurchmesser des Dorns 9 ist aus Stabilitätsgründen größer als der maximale Außendurchmesser des Stabs 10. Der Stab 10 kann an seinem freien Ende eine zylinderförmige Verdickung 11 mit einem sich verjüngenden freien Ende 12 aufweisen. Die Unterseite der Stufen 8 kann als Hakenform 13 ausgebildet sein.

In der Figur 3 wird ein Zerkleinerungswerkzeug und zwar eine Schneidscheibe 14 mit einem Messer bzw. einer Klinge 15 und weiteren Schneidmitteln 16 gezeigt. Durch das Messer 15 und die weiteren Schneidmittel 16 kann die Zutat einer Speise oder eine Speise durch Drehen der Schneidscheibe 14 um ihre Welle 17 zerkleinert werden. Durch das Zerkleinern passiert eine zerkleinerte Zutat die Schneidscheibe 14. Die Welle 17 ist schaftförmig, zumindest teilweise hohl und weist an ihren Enden kranzförmige Kupplungselemente 18 und 19 auf. Der Stab 10 kann durch das obere Kupplungselement 18 hindurch in den Schaft der Welle 17 hineingesteckt werden. Dies stabilisiert die Lage der Welle 17 während des Betriebs im zusammengesetzten Zustand des Zerkleinerungsaufsatzes.

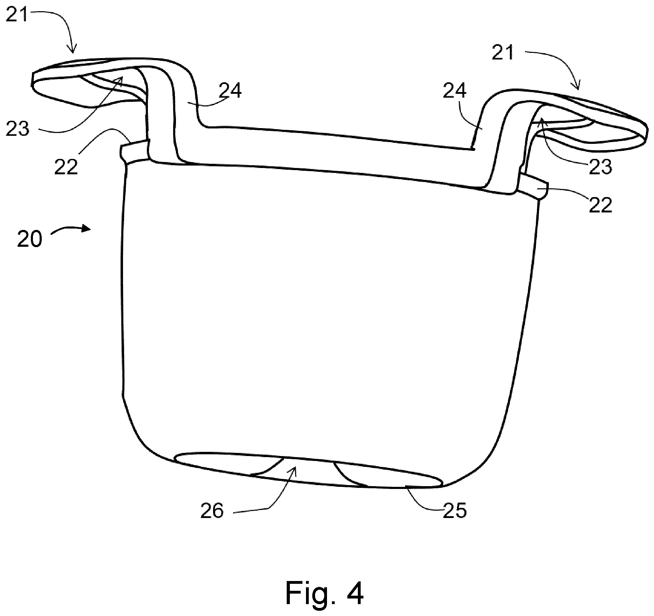

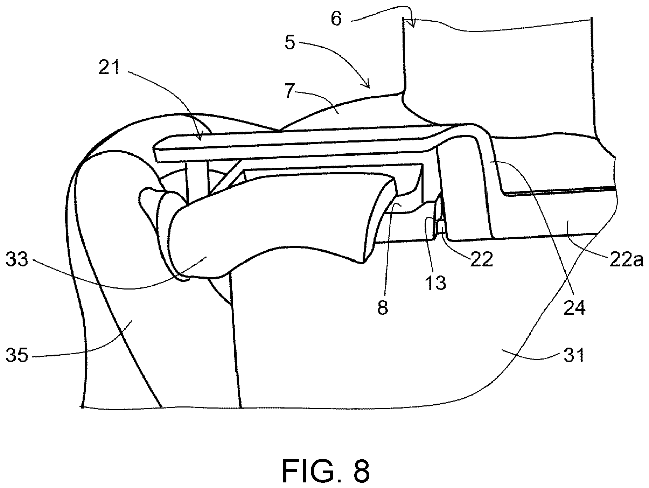

Die Figur 4 zeigt einen Behälter 20 des Zerkleinerungsaufsatzes. An der Oberseite des Behälters 20 gibt es zwei gegenüberliegende Griffe 21. Die beiden Griffe 21 erstrecken sich von oberen Randabschnitten 22 des Behälters 20 zunächst nach oben und dann nach außen zur Seite. Ein jeder Griff 21 bildet so eine Öffnung 23. In die Öffnungen 23 können die Stufen 8 eingesetzt werden. Die Unterseiten der Stufen 8 sitzen dann auf den Randabschnitten 22 auf. Die nach oben weisenden Stege 24 der Griffe 21 verhindern dann ein seitliches Verrutschen der Abdeckung 5 mit der Kappe 7 und tragen zu einer Positionierung der Abdeckung 5 bei. Die Hakenformen 13 der Unterseiten können dann die Randabschnitte 22 umgreifen und so ergänzend dazu beitragen, dass die Abdeckung 5 relativ zum Behälter 20 positioniert wird und ein seitliches Verrutschen verhindert wird (siehe auch Figur 8).

Der Boden 25 des Behälters 20 weist eine trichterförmige Öffnung 26 auf, die in einen hohlen Schaft einmündet.

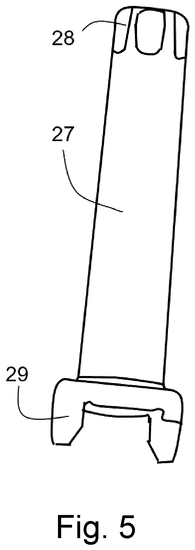

In der Figur 5 wird eine Welle 27 gezeigt, die durch die trichterförmige Öffnung 26 und den sich daran anschließenden hohlen Schaft hindurch gesteckt werden kann. Das obere Ende der Welle 27 weist ein Kupplungselement 28 auf, das in das untere Kupplungselement 19 der Schneidscheibe 13 eingesetzt werden kann. Die äußere Kontur des Kupplungselements 28 korrespondiert mit der inneren Kontur des Kupplungselements 19. Dadurch wird erreicht, dass die beiden Kupplungselemente drehfest miteinander verbunden sind, wenn das Kupplungselement 28 in das Kupplungselement 19 eingesetzt ist.

Die Welle 27 weist ein unteres Kupplungselement 29 auf. Das untere Kupplungselement 29 kann so auf ein Mischwerkzeug im Inneren eines Speisenzubereitungsgefäßes einer Küchenmaschine aufgesetzt werden, dass das Kupplungselement 29 drehfest mit dem Mischwerkzeug verbunden ist. Ein Drehen des Mischwerkzeugs hat dann zur Folge, dass auch die Schneidscheibe 13 gedreht wird, wenn die Welle 27 drehfest mit der Schneidscheibe 13 verbunden ist.

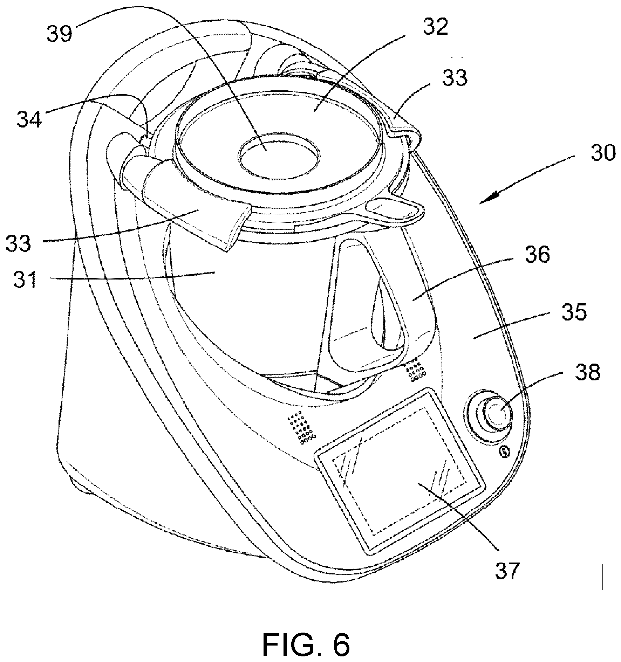

Die Figur 6 zeigt eine solche Küchenmaschine 30 mit einem Speisenzubereitungsgefäß 31. Auf dem Speisenzubereitungsgefäß 31 ist ein Deckelteil 32 aufgesetzt. Das Deckelteil 32 für das Speisenzubereitungsgefäß 31 ist durch armartige Verriegelungselemente, also Arme 33, verriegelt. Das Deckelteil 32 befindet sich zwischen den beiden Armen 33. Die Arme 33 können um ihre Längsachse motorisiert gedreht werden und so hin und her zwischen einer Öffnungsstellung und einer Verriegelungsstellung. Das Deckelteil 32 hat einen Sensor und zwar einen Kipphebel 34 eines elektrischen Schalters heruntergedrückt und so ausgelöst. Die armartigen Verriegelungselemente 33 und der Kipphebel 34 sind an einem Basisteil 35 der Küchenmaschine 30 angebracht. Das Speisenzubereitungsgefäß 31 ist in das Basisteil 35 eingesetzt und kann aus dem Basisteil 35 herausgenommen werden. Um das Speisenzubereitungsgefäß 31 herausnehmen zu können, umfasst dieses einen Griff 36. Das Basisteil 35 umfasst zur Bedienung ein Display 37 und einen Drehschalter 38. Das Deckelteil 32 umfasst mittig eine Öffnung 39, die mit einem gefäßartigen Verschluss verschlossen werden kann. Durch den ausgelösten Kipphebel 34 hat die Steuerungseinheit der Küchenmaschine 30 die Information erhalten, dass das Deckelteil ordnungsgemäß aufgesetzt und verriegelt ist. Eine Information über den Zustand des nicht gezeigten gefäßartigen Verschlusses hat die Steuerungseinheit der Küchenmaschine 30 allerdings nicht erhalten können.

Werden die armartigen Verriegelungselemente 33 in ihre Öffnungsstellung gedreht, so wird dadurch der Kipphebel 34 durch Federkraft nach oben in seine nicht ausgelöste Stellung bewegt. Diese Bewegung des Kipphebels 34 hebt das Deckelteil 32 entsprechend an. Das Deckelteil 32 ist dann zwar auf dem Kipphebel 34 aufgesetzt, aber nicht verriegelt.

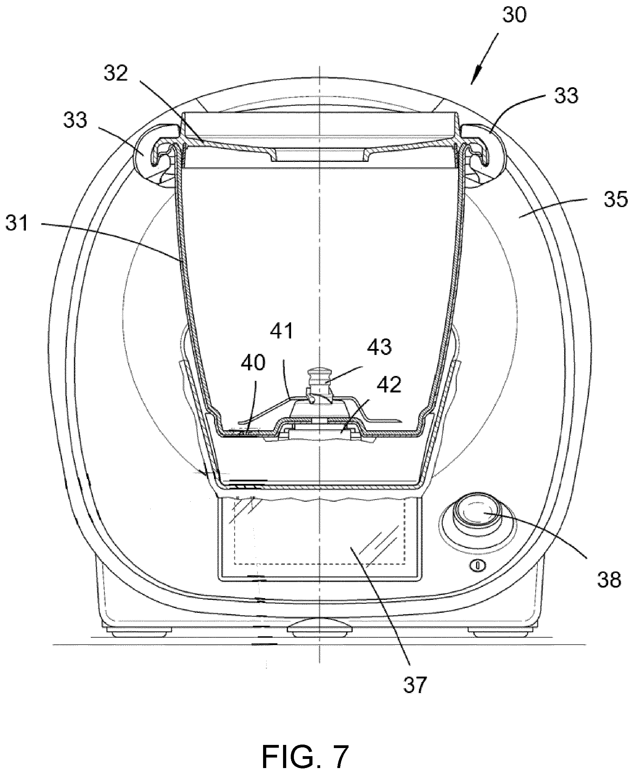

Die Figur 7 zeigt die Küchenmaschine 30 aus der Figur 6. Der Bereich des Speisenzubereitungsgefäßes 31 ist aufgeschnitten gezeigt, sodass das Innenleben sichtbar ist. Am Grund 40 des Speisenzubereitungsgefäßes 31 befindet sich ein drehbares Mischwerkzeug 41. Das Mischwerkzeug 41 wird durch einen Welle 43 angetrieben, die durch den Grund 40 des Speisenzubereitungsgefäßes 31 hindurchgeführt ist. Die Welle 43 ist mit einem unteren Kupplungselement in ein Kupplungselement 42 des Basisteils 35 eingesetzt und dadurch drehfest verbunden. Das Kupplungselement 42 ist mit der Welle eines elektrischen Motors verbunden, der sich im Basisteil 35 befindet. Über den elektrischen Motor im Basisteil 35 kann das Mischwerkzeug 41 gedreht werden.

Wird das in der Figur 7 links oben gezeigte Verriegelungselement 33 entgegengesetzt zum Uhrzeigersinn gedreht und das rechts oben gezeigte Verriegelungselement 33 im Uhrzeigersinn, so wird die Verriegelung gelöst und das Deckelteil 32 kann vom Speisenzubereitungsgefäß 31 abgenommen werden.

Das in der Figur 5 gezeigte Kupplungselement 29 kann auf die Welle 43 so aufgesetzt werden, dass eine drehfeste Verbindung zwischen dem Mischwerkzeug 41 und dem Kupplungselement 29 hergestellt wird.

Anstelle des Deckelteils 32 kann der Zerkleinerungsaufsatz auf das Speisenzubereitungsgefäß 31 aufgesetzt werden. Dies wird in der Figur 8 in der verriegelten Stellung ausschnittsweise gezeigt. Das Verriegelungselement 33 liegt so auf der Stufe 8 der Abdeckung 5 auf, dass dadurch die Abdeckung 5 nicht mehr vom Speisenzubereitungsgefäß 31 gelöst werden kann. Die Abdeckung 5 liegt auf dem oberen Rand 22 des Gefäßes mit dem Griff 21 auf. Dadurch kann das Gefäß mit dem Griff 21 nicht aus dem Speisenzubereitungsgefäß 31 herausgenommen werden. Der Kipphebel 34 wird durch einen seitlich abstehenden Randabschnitt 22a des Gefäßes mit dem Griff 21 betätigt.

Zwar kann die Abdeckung 5 auch ohne Vorhandensein des Gefäßes, das den Griff 21 umfasst, verriegelt werden. Dann allerdings wird der Kipphebel 34 nicht betätigt und damit nicht ausgelöst. Die Steuerungseinrichtung der Küchenmaschine ist zwar so eingerichtet, dass sie dann den verriegelten Zustand erkennt. Gleichzeitig verfügt die Steuerungseinrichtung über die Information, dass der Kipphebel 34 aufgrund des Fehlens des Gefäßes mit dem Griff 21 nicht ausgelöst worden ist. Die Steuerungseinrichtung erkennt daher einen fehlerhaften Zustand.

Das Erkennen des verriegelten Zustands durch die Verriegelungselemente 33 kann über einen Drucksensor erfolgen oder aber beispielsweise über eine Auswertung eines Stromverbrauchs des für die Verriegelung eingesetzten Elektromotors, der eine erhöhte Kraft aufwenden muss, wenn eine Verriegelung stattfindet.

Das Beispiel hat gezeigt, dass zumindest zwei Teile eines mehrteiligen Anbauteils mit geringem Aufwand überwacht werden können.

## Patentansprüche

1. Speisenzubereitungsgerät (30) mit einem Speisenzubereitungsgefäß (31), einem Deckel (32), der auf das Speisenzubereitungsgefäß (31) aufgesetzt werden kann, einem Anbauteil, das anstelle des Deckels (32) auf das Speisenzubereitungsgefäß (31) aufgesetzt werden kann, wobei das Anbauteil ein erstes Teil (5) und ein zweites Teil (20 bis 26) umfasst, einer Verriegelungseinrichtung für ein Verriegeln des auf das Speisenzubereitungsgefäß (31) aufgesetzten Deckels (32) sowie für ein Verriegeln des auf das Speisenzubereitungsgefäß (31) aufgesetzten Anbauteils, einem Sensor (34), der ausgelöst ist, wenn der aufgesetzte Deckel (32) durch die Verriegelungseinrichtung verriegelt ist, und der ausgelöst ist, wenn das aufgesetzte Anbauteil durch die Verriegelungseinrichtung verriegelt ist, wobei der Sensor (34) nicht ausgelöst ist, wenn nur ein Teil (5) des Anbauteils auf das Speisenzubereitungsgefäß (31) aufgesetzt und verriegelt ist.

2. Speisenzubereitungsgerät (30) nach dem vorhergehenden Anspruch, **dadurch gekennzeichnet, dass** die Verriegelungseinrichtung so beschaffen ist, dass das Anbauteil im aufgesetzten Zustand durch das Verriegeln von einer Ausgangsstellung in eine Endstellung bewegt wird, und der Sensor (34) ausgelöst ist, wenn sich das Anbauteil in der Endstellung befindet.

3. Speisenzubereitungsgerät (30) nach dem vorhergehenden Anspruch, **dadurch gekennzeichnet, dass** die Verriegelungseinrichtung so beschaffen ist, dass das erste Teil (5) des Anbauteils durch das Verriegeln von der Ausgangsstellung in die Endstellung bewegt wird und das erste Teil (5) so beschaffen ist, dass dieses durch das Verriegeln das zweite Teil (20 bis 26) des Anbauteils von der Ausgangsstellung in die Endstellung bewegt, und das zweite Teil (20 bis 26) so beschaffen ist, dass dieses den Sensor (34) ausgelöst hat, wenn das zweite Teil (20 bis 26) sich in seiner Endstellung befindet.

4. Speisenzubereitungsgerät (30) nach dem vorhergehenden Anspruch, **dadurch gekennzeichnet, dass** das zweite Teil ein Behälter (20 bis 26) ist und das erste Teil eine Abdeckung (5) für den Behälter.

5. Speisenzubereitungsgerät (30) nach dem vorhergehenden Anspruch, **dadurch gekennzeichnet, dass** der Behälter (20 bis 26) an seiner Oberseite zumindest abschnittsweise einen seitlich abstehenden Rand (22, 22a) aufweist.

6. Speisenzubereitungsgerät (30) nach dem vorhergehenden Anspruch, **dadurch gekennzeichnet, dass** der Sensor (34) durch den abstehenden Rand (22a) des Behälters (20 bis 26) ausgelöst werden kann.

7. Speisenzubereitungsgerät (30) nach einem der drei vorhergehenden Ansprüche, **dadurch gekennzeichnet, dass** der Behälter (20 bis 26) an seiner Oberseite zumindest einen nach oben und/ oder seitlich abstehenden Griff (21) umfasst.

8. Speisenzubereitungsgerät (30) nach einem der vier vorhergehenden Ansprüche, **dadurch gekennzeichnet, dass** das Anbauteil ein drehbares Zerkleinerungswerkzeug (14) zum Zerkleinern von Speisen umfasst, wobei das Zerkleinerungswerkzeug (14) relativ zu dem Behälter (20 bis 26) derart angeordnet oder anordbar ist, dass eine Speise nach der Zerkleinerung mittels des Zerkleinerungswerkzeugs (14) schwerkraftbedingt nach unten fällt, um im Behälter (20 bis 26) des Anbauteils aufgefangen zu werden.

9. Speisenzubereitungsgerät (30) nach einem der vorhergehenden Ansprüche, **dadurch gekennzeichnet, dass** sich das Anbauteil zwischen zwei Verriegelungselementen (33) der Verriegelungseinrichtung befindet, wenn das Anbauteil auf das Speisenzubereitungsgefäß (31) aufgesetzt ist.

10. Speisenzubereitungsgerät (30) nach einem der vorhergehenden Ansprüche, **dadurch gekennzeichnet, dass** ein Verriegelungselement der Verriegelungseinrichtung ein um seine Längsachse drehbarer Arm (33) ist, der von einer Öffnungsstellung in eine Verriegelungsstellung und zurückgedreht werden kann, wobei der drehbare Arm (33) vorzugsweise durch einen elektrischen Antrieb des Speisenzubereitungsgeräts (30) gedreht werden kann.

11. Speisenzubereitungsgerät (30) nach einem der vorhergehenden Ansprüche, **dadurch gekennzeichnet, dass** der Sensor ein Schalter mit einem Kipphebel (34) ist, auf dem das Anbauteil aufliegt, wenn das Anbauteil auf das Speisenzubereitungsgefäß (31) aufgesetzt ist.

12. Speisenzubereitungsgerät (30) nach einem der vorhergehenden Ansprüche mit einem drehbaren Mischwerkzeug (41) zum Mischen und/oder Zerkleinern einer Speise in einem Bodenbereich (40) des Speisenzubereitungsgefäßes (31), mit einer Steuerungseinheit, mit der die Drehzahl für das Mischwerkzeug (41) eingestellt werden kann, wobei durch die Steuerungseinheit für das Mischwerkzeug (41) vorzugsweise eine Drehzahl von wenigstens 2000 Umdrehungen pro Minute, bevorzugt von wenigstens 5000 Umdrehungen pro Minute, besonders bevorzugt von wenigstens 8000 Umdrehungen pro Minute, eingestellt werden kann.

13. Verfahren zum Zerkleinern einer Speise unter Nutzung eines Speisenzubereitungsgeräts (30) nach einem der vorhergehenden Ansprüche 1 bis 12, wobei das Anbauteil auf das Speisenzubereitungsgefäß (31) des Speisenzubereitungsgeräts (30) aufgesetzt wird, und nach dem Aufsetzen verriegelt wird, wobei durch das Verriegeln der Sensor (34) durch ein Teil (5) des Anbauteils ausgelöst wird.

## Claims

1. Food preparation appliance (30) with a food preparation vessel (31), a lid (32) which can be placed on the food preparation vessel (31), an attachment part which can be placed on the food preparation vessel (31) instead of the lid (32), wherein the attachment part comprises a first part (5) and a second part (20 to 26); with a locking device for locking the lid (32) placed on the food preparation vessel (31) and for locking the attachment part placed on the food preparation vessel (31), a sensor (34) which is triggered when the placed lid (32) is locked by the locking device, and which is triggered when the placed attachment part is locked by the locking device, wherein the sensor (34) is not triggered when only one part (5) of the attachment part is placed on the food preparation vessel (31) and locked.

2. Food preparation appliance (30) according to the preceding claim, **characterized in that** the locking device is such that the attachment part in the placed state is moved by the locking from an initial position to an end position, and the sensor (34) is triggered when the attachment part is in the end position.

3. Food preparation appliance (30) according to the preceding claim, **characterized in that** the locking device is such that the first part (5) of the attachment part is moved from the initial position to the end position by the locking, and the first part (5) is such that it moves the second part (20 to 26) of the attachment part from the initial position to the end position by the locking, and the second part (20 to 26) is such that it has triggered the sensor (34) when the second part (20 to 26) is in its end position.

4. Food preparation appliance (30) according to the preceding claim, **characterized in that** the second part is a container (20 to 26) and the first part is a cover (5) for the container.

5. Food preparation appliance (30) according to the preceding claim, **characterized in that** the container (20 to 26) has on its upper side, at least in sections, a laterally projecting edge (22, 22a).

6. Food preparation appliance (30) according to the preceding claim, **characterized in that** the sensor (34) can be triggered by the projecting edge (22a) of the container (20 to 26).

7. Food preparation appliance (30) according to one of the three preceding claims, **characterized in that** the container (20 to 26) comprises on its upper side at least one upwardly and/or laterally projecting handle (21).

8. Food preparation appliance (30) according to one of the four preceding claims, **characterized in that** the attachment part comprises a rotatable chopping tool (14) for chopping foods, wherein the chopping tool (14) is arranged or arrangeable relative to the container (20 to 26) such that a food, after being chopped by means of the chopping tool (14), falls down by gravity to be collected in the container (20 to 26) of the attachment part.

9. Food preparation appliance (30) according to one of the preceding claims, **characterized in that** the attachment part is located between two locking elements (33) of the locking device when the attachment part is placed on the food preparation vessel (31).

10. Food preparation appliance (30) according to one of the preceding claims, **characterized in that** a locking element of the locking device is an arm (33) rotatable about its longitudinal axis, which can be rotated from an open position to a locking position and back, wherein the rotatable arm (33) can preferably be rotated by an electric drive of the food preparation appliance (30).

11. Food preparation appliance (30) according to one of the preceding claims, **characterized in that** the sensor is a switch with a rocker arm (34) on which the attachment part rests when the attachment part is placed on the food preparation vessel (31).

12. Food preparation appliance (30) according to one of the preceding claims with a rotatable mixing tool (41) for mixing and/or chopping a food in a bottom region (40) of the food preparation vessel (31), with a control unit with which the rotational speed for the mixing tool (41) can be set, wherein preferably a rotational speed of at least 2000 revolutions per minute, preferably of at least 5000 revolutions per minute, particularly preferably of at least 8000 revolutions per minute, can be set by the control unit for the mixing tool (41).

13. Method for chopping a food using a food preparation appliance (30) according to one of the preceding claims 1 to 12, **characterized in that** the attachment part is placed on the food preparation vessel (31) of the food preparation appliance (30) and is locked after being placed, wherein the sensor (34) is triggered by a part (5) of the attachment part by the locking.

## Revendications

1. Appareil de préparation d'aliments (30) avec un récipient de préparation d'aliments (31), un couvercle (32) qui peut être posé sur le récipient de préparation d'aliments (31), une pièce rapportée qui peut être posée sur le récipient de préparation d'aliments (31) à la place du couvercle (32), dans lequel la pièce rapportée comprend une première pièce (5) et une deuxième pièce (20 à 26), un dispositif de verrouillage pour un verrouillage du couvercle (32) posé sur le récipient de préparation d'aliments (31) ainsi que pour un verrouillage de la pièce rapportée posée sur le récipient de préparation d'aliments (31), un capteur (34) qui est déclenché lorsque le couvercle (32) posé est verrouillé par le dispositif de verrouillage, et qui est déclenché lorsque la pièce rapportée posée est verrouillée par le dispositif de verrouillage, dans lequel le capteur (34) n'est pas déclenché lorsque seule une pièce (5) de la pièce rapportée est posée sur le récipient de préparation d'aliments (31) et verrouillée.

2. Appareil de préparation d'aliments (30) selon la revendication précédente, **caractérisé en ce que** le dispositif de verrouillage est constitué de telle sorte que la pièce rapportée, à l'état posé, est déplacée par le verrouillage d'une position initiale à une position finale, et le capteur (34) est déclenché lorsque la pièce rapportée se trouve dans la position finale.

3. Appareil de préparation d'aliments (30) selon la revendication précédente, **caractérisé en ce que** le dispositif de verrouillage est constitué de telle sorte que la première pièce (5) de la pièce rapportée est déplacée par le verrouillage de la position initiale à la position finale, et la première pièce (5) est constituée de telle sorte que celle-ci déplace par le verrouillage la deuxième pièce (20 à 26) de la pièce rapportée de la position initiale à la position finale, et la deuxième pièce (20 à 26) est constituée de telle sorte que celle-ci a déclenché le capteur (34) lorsque la deuxième pièce (20 à 26) se trouve dans sa position finale.

4. Appareil de préparation d'aliments (30) selon la revendication précédente, **caractérisé en ce que** la deuxième pièce est un récipient (20 à 26) et la première pièce est un couvercle (5) pour le récipient.

5. Appareil de préparation d'aliments (30) selon la revendication précédente, **caractérisé en ce que** le récipient (20 à 26) présente sur sa face supérieure, au moins par sections, un bord (22, 22a) faisant saillie latéralement.

6. Appareil de préparation d'aliments (30) selon la revendication précédente, **caractérisé en ce que** le capteur (34) peut être déclenché par le bord (22a) faisant saillie du récipient (20 à 26).

7. Appareil de préparation d'aliments (30) selon l'une des trois revendications précédentes, **caractérisé en ce que** le récipient (20 à 26) comprend sur sa face supérieure au moins une poignée (21) faisant saillie vers le haut et/ou latéralement.

8. Appareil de préparation d'aliments (30) selon l'une des quatre revendications précédentes, **caractérisé en ce que** la pièce rapportée comprend un outil de broyage tournable (14) pour broyer des aliments, dans lequel l'outil de broyage (14) est disposé ou peut être disposé par rapport au récipient (20 à 26) de telle sorte qu'un aliment tombe par gravité vers le bas après avoir été broyé au moyen de l'outil de broyage (14), afin d'être recueilli dans le récipient (20 à 26) de la pièce rapportée.

9. Appareil de préparation d'aliments (30) selon l'une des revendications précédentes, **caractérisé en ce que** la pièce rapportée se trouve entre deux éléments de verrouillage (33) du dispositif de verrouillage lorsque la pièce rapportée est posée sur le récipient de préparation d'aliments (31).

10. Appareil de préparation d'aliments (30) selon l'une des revendications précédentes, **caractérisé en ce qu'**un élément de verrouillage du dispositif de verrouillage est un bras tournable (33) autour de son axe longitudinal, qui peut être tourné d'une position d'ouverture à une position de verrouillage et inversement, dans lequel le bras tournable (33) peut être tourné de préférence par un entraînement électrique de l'appareil de préparation d'aliments (30).

11. Appareil de préparation d'aliments (30) selon l'une des revendications précédentes, **caractérisé en ce que** le capteur est un interrupteur avec un levier basculant (34) sur lequel repose la pièce rapportée lorsque la pièce rapportée est posée sur le récipient de préparation d'aliments (31).

12. Appareil de préparation d'aliments (30) selon l'une des revendications précédentes avec un outil de mélange tournable (41) pour mélanger et/ou broyer un aliment dans une zone de fond (40) du récipient de préparation d'aliments (31), avec une unité de commande avec laquelle la vitesse de rotation pour l'outil de mélange (41) peut être réglée, dans lequel une vitesse de rotation d'au moins 2000 tours par minute, de préférence d'au moins 5000 tours par minute, de manière particulièrement préférée d'au moins 8000 tours par minute, peut être réglée par l'unité de commande pour l'outil de mélange (41).

13. Procédé de broyage d'un aliment en utilisant un appareil de préparation d'aliments (30) selon l'une des revendications précédentes 1 à 12, dans lequel la pièce rapportée est posée sur le récipient de préparation d'aliments (31) de l'appareil de préparation d'aliments (30), et est verrouillée après la pose, dans lequel par le verrouillage le capteur (34) est déclenché par une pièce (5) de la pièce rapportée.
